# EUROPÄISCHE PATENTANMELDUNG

(11) **EP 1 184 146 A2**
(43) Veröffentlichungstag der Anmeldung: **06.03.2002**
(21) Anmeldenummer: 01115420.0
(22) Anmeldetag: 27.06.2001
(51) Int. Cl.: B28B 11/22, B24B 9/06

(54) **Rundtakt-Bearbeitungsmaschine, insbesondere Putzmaschine, für keramische Artikel**

(30) Priorität: 18.08.2000 DE 10040365
(71) Anmelder: Thuringia Netzsch Maschinen- und Anlagenbau GmbH & Co. KG, 96515 Sonneberg (DE)
(72) Erfinder: Maslowski, Jürgen, 58256 Ennepetal (DE)
(74) Vertreter: Hübner, Gerd, Dipl.-Phys.

(57) **Zusammenfassung**

Eine Rundtakt-Bearbeitungsmaschine für keramische Artikel weist Bearbeitungsstationen 2.1 - 2.6, auf die einen in seiner Drehstellung definiert steuerbaren Drehteller 10 zur Aufnahme eines keramischen Artikels 5 sowie eine Manipulatoreinheit 13 für das Bearbeitungswerkzeug 25 umfassen. Die Manipulatoreinheit 13 weist einerseits einen definiert linear zum Drehteller 10 zustellbaren Werkzeugschlitten 15 und andererseits einen in seiner Drehstellung definiert steuerbaren, drehbar am Werkzeugschlitten 15 gelagerten Werkzeugträger 21 auf.

## Beschreibung

Die Erfindung betrifft eine Rundtakt-Bearbeitungsmaschine, insbesondere eine Putzmaschine, für keramische Artikel insbesondere mit komplexen geometrischen Konturformen.

Grundsätzlich sind in der Keramikindustrie Rundtakt-Bearbeitungsmaschinen bekannt, die üblicherweise ein Maschinengestell und mehrere, über den Umfang des Maschinengestells verteilte Bearbeitungsstationen aufweisen. Letztere sind jeweils mit Bearbeitungswerkzeugen für den keramischen Artikel bestückt. Ferner weisen solche Bearbeitungsmaschinen eine Aufgabe- und eine Abnahmestation für die zu bearbeitenden keramischen Artikel auf. Zu deren Transport zwischen den Stationen ist ein mehrarmiges Drehkreuz vorgesehen, an dessen Arme jeweils Halter für einen keramischen Artikel angeordnet sind.

Herkömmlicherweise sind die Bearbeitungswerkzeuge solcher Rundtakt-Maschinen nur in einer Achsrichtung über einen fixen Zustellweg verschiebbar, so daß das Werkzeug radial an das sich drehende Werkstück herangefahren wird und den Putzvorgang durchführt. Dabei muß das Werkzeug in der Regel noch nachgiebig sein, um schwach von der Kreisform abweichende Artikelkonturen, wie sie insbesondere durch die grundsätzlich vorhandenen Artikeltoleranzen und Positionierungsungenauigkeiten in der Maschine auftreten, ausgleichen zu können.

Zur Flexibilisierung der Werkstückbearbeitung ist es ferner bereits bekannt, daß Bearbeitungswerkzeug am Manipulationsarm eines Mehrachsenroboters anzubringen und damit das Putzen auch aufwendiger, unrunder Konturen bewerkstelligen zu können. Derartige Bearbeitungsroboter sind jedoch konstruktiv und steuerungstechnisch äußerst aufwendig und damit kostenintensiv. Zudem benötigen sie in der Regel vier und mehr Achsen, um genügend Freiheitsgrade zum Nachfahren und Bearbeiten praktisch beliebiger Konturen zur Verfügung zu haben. Diese Vielachsigkeit bringt relativ hohe bewegte Massen mit sich, was zu einer begrenzten Dynamik der Werkzeugbewegung führt. Insofern ist die Bearbeitungsgeschwindigkeit solcher Bearbeitungsroboter verbesserungsbedürftig.

Ausgehend von der geschilderten Problematik liegt der Erfindung die Aufgabe zugrunde, eine Rundtakt-Bearbeitungsmaschine der gattungsgemäßen Art so weiterzubilden, daß auch komplexe Strukturen mit vergleichsweise geringem Maschinenaufwand und zügig durchführbar sind.

Diese Aufgabe wird durch die im Kennzeichnungsteil des Anspruches 1 angegebenen Merkmalen gelöst. Demnach weisen die Bearbeitungsstationen - sofern sie die entsprechenden Bearbeitungsvorgänge durchzuführen haben - einerseits einen in seiner Drehstellung definiert steuerbaren Drehteller zur Aufnahme eines keramischen Artikels auf. Das Bearbeitungswerkzeug selbst ist an einer Manipulatoreinheit angebracht, die einerseits einen definiert linear zum Drehteller zustellbaren Werkzeugschlitten und andererseits einen drehbar daran gelagerten Werkzeugträger aufweist. Letzterer ist in seiner Drehstellung ebenfalls definiert steuerbar, so daß sich mit dem definierten Linearantrieb des Werkzeugschlittens und der definierten Drehstellungs-Steuerung des Drehtellers insgesamt drei Achsen ergeben. Diese reichen aus, um das Bearbeitungswerkzeug durch eine Überlagerung der Bewegung dieser drei Achsen definiert der entsprechenden Konturform des keramischen Artikels nachzuführen. Diese kann dabei auch komplex ausfallen, da durch die beiden Freiheitsgrade der Manipulatoreinheit in einer Erstreckungsebene des Konturrandes eines keramischen Artikels praktisch jede Drehstellung und Radialposition einnehmbar ist.

Aufgrund der vorstehenden Konzeption können nicht nur nachgiebige Werkzeuge, wie rotierende Schwämme, sondern auch starre Werkzeuge wie Fräser zum Putzen des keramischen Artikels eingesetzt werden.

Gegenüber aufwendigen Roboter-Bearbeitungsmaschinen besteht wiederum der Vorteil, daß durch die begrenzte Zahl von drei Achsen der konstruktive Aufwand für die Rundtakt-Bearbeitungsmaschine überschaubar bleibt. Da ferner deutlich geringere bewegte Massen bei der Manipulation des Bearbeitungswerkzeuges zu handhaben sind, kann die Bearbeitungsmaschine mit größerer Dynamik und damit höherer Geschwindigkeit und Genauigkeit arbeiten.

Bevorzugte Ausführungsformen der Erfindung sind in den Unteransprüchen angegeben. Weitere Merkmale, Einzelheiten und Vorteile dazu ergeben sich ferner aus der nachfolgenden Beschreibung, in der ein Ausführungsbeispiel anhand der beigefügten Zeichnungen näher erläutert wird. Es zeigen:
- Fig. 1: eine Draufsicht auf eine Rundtakt-Bearbeitungsmaschine, und
- Fig. 2.: eine vergrößerte Detail-Draufsicht einer Bearbeitungsstation der Rundtakt-Maschine gemäß Fig. 1.

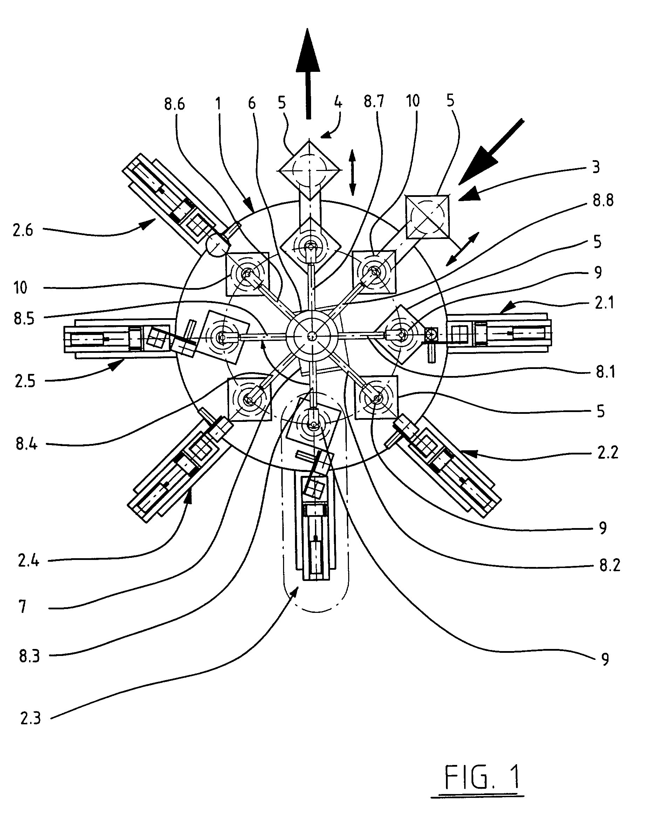

Wie in Fig. 1 angedeutet ist, weist die Rundtakt-Putzmaschine ein Maschinengestell 1 auf, das insgesamt sechs Bearbeitungsstationen 2.1 - 2.6 zum Putzen sowie eine Aufgabestation 3 und eine Abnahmestation 4 bereitstellt. Alle Stationen 2.1 - 2.6, 3 und 4 sind gleichmäßig über den Umfang des Maschinengestells 1 verteilt. Zum Transport der keramischen Artikel, die in Fig. 1 als quadratische Platten 5 angedeutet sind, durch die Putzmaschine ist ein Drehkreuz 6 vorgesehen, das zentral am Maschinengestell 1 gelagert und über eine in Fig. 1 angedeutete Antriebseinheit 7 taktweise drehbar ist. Die Arme 8.1 bis 8.8 des Drehkreuzes 6 weisen dieselbe Teilung wie die Anordnung der Bearbeitungsstationen 2.1 - 2.6 sowie Aufgabe- und Abnahmestationen 3, 4 bezüglich des Umfangs des Maschinengestells 1 auf, so daß durch eine Drehung des Drehkreuzes 6 um jeweils 45° jeder Artikel 5 um eine Station weitertransportiert wird.

Zur Halterung der Porzellanplatten 5 am Drehkreuz 6 sind jeweils Sauger 9 an den freien Enden der Arme 8.1 - 8.8 vorgesehen.

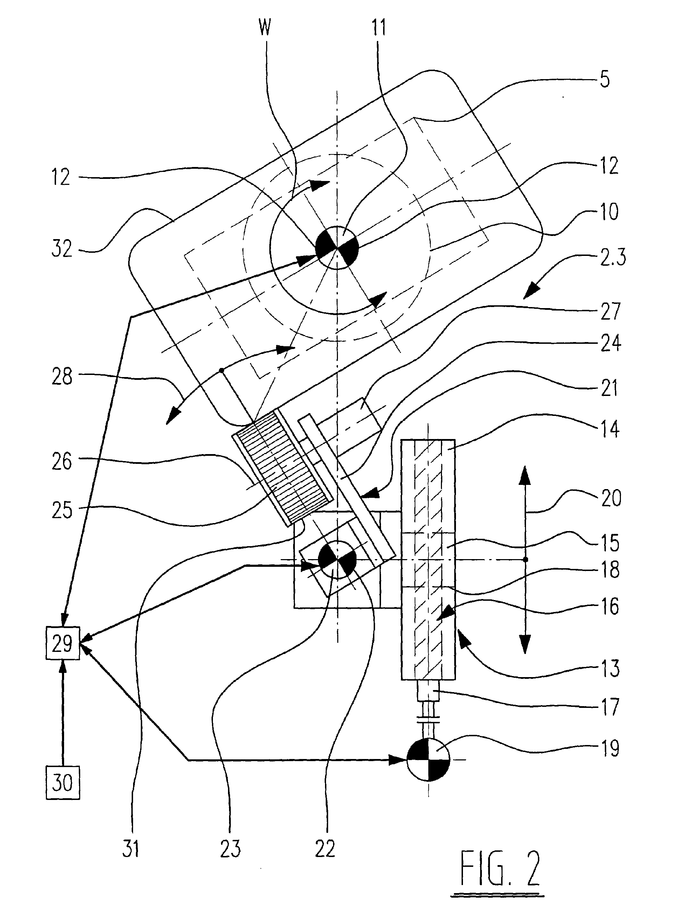

Von den Bearbeitungsstationen 2.1 - 2.6 ist die Station 2.3 in Fig. 2 repräsentativ und vergrößert dargestellt. Wie aus dieser Zeichnung erkennbar ist, ist in der Bearbeitungsstation 2.3 ein am Maschinengestell 1 gelagerter Drehteller 10 vorgesehen, der um eine vertikale Achse mit Hilfe eines Servomotors 11 drehangetrieben ist. Der Drehteller 10 dient zur Aufnahme des jeweils zu bearbeitenden keramischen Artikels (Platte 5). Durch die Verwendung des Servomotors 11 ist der Drehteller 10 in seiner Drehstellung bezüglich der Drehachse 12 definiert steuerbar.

Ferner ist in der Bearbeitungsstation 2.3 eine Manipulatoreinheit 13 für das Bearbeitungswerkzeug vorgesehen. Diese weist einerseits einen an einer Linearführung 14 horizontal und im wesentlichen radial zum Zentrum des Drehkreuzes 6 verschiebbaren Werkzeugschlitten 15 auf, der über einen üblichen Spindeltrieb 16 mit Spindel 17 und Spindelmutter 18 angetrieben ist. Die Spindel 17 wird durch einen weiteren Servomotor 19 betätigt, so daß der Werkzeugschlitten 15 definiert in Linearrichtung zum Drehteller 10 und damit zu der zu bearbeitenden keramischen Platte 5 zustellbar ist (Zustellrichtung 20).

Am Werkzeugschlitten 15 ist ein Werkzeugträger 21 um eine vertikale Achse 22 drehbar gelagert. Der Drehantrieb wird durch einen weiteren Servomotor 23 übernommen. An einem Ausleger 24 des Werkzeugträgers 21 ist ein Fräswerkzeug 25 um eine horizontale Achse 26 mit Hilfe des Motors 27 rotationsgetrieben. Mit Hilfe des Werkzeugträgers 21 läßt sich das Fräswerkzeug 25 entlang der Drehrichtung 28 verstellen.

Die Servomotoren 11, 19 und 23 von Drehteller 10, Spindeltrieb 16 und Werkzeugträger 21 sind mit einer gemeinsamen Steuereinheit 29 gekoppelt, die die einander überlagerten Bewegungen dieser drei Maschinenteile steuert. Dazu werden zunächst die Koordinaten der Sollkontur der keramischen Platte 5 außerhalb der Putzmaschine ermittelt. Hierfür können unterschiedliche Verfahren angewendet werden, wie z. B. das mechanische Abtasten einer Schablone bzw. eines bereits fertig bearbeiteten Artikels. Auch die Anwendung optischer Bilderkennungssysteme, wie Visionssysteme auf Basis von Zeilen- oder Matrixkameras, ist möglich. Diese Eingabeeinheit 30 ist in Fig. 2 lediglich als Diagrammblock schematisch angedeutet.

Die Eingabeeinheit 30 überträgt die Koordinaten der Konturpunkte des jeweiligen keramischen Artikels zur Steuereinheit 29, der mit einem geeignetem Steuerprogramm zu den Konturpunkten die zugehörigen Tangentenrichtungen ermittelt, die das Fräswerkzeug 25 einnehmen muß. Dabei werden die in der Steuereinheit 29 hinterlegten, kinematisch relevanten Daten der einzelnen Bearbeitungsstationen 2.1 - 2.6 mit in die Berechnung der Tangentenrichtungen einbezogen.

Aus dieser Gesamtheit von Daten ermittelt die Steuereinheit 29 nun ein entsprechendes Verfahrprogramm für die Servomotoren 11, 19, 23. Dabei wird in Abhängigkeit des Drehwinkels W des Drehtellers 10 das Fräswerkzeug 25 durch eine überlagerte Bewegung entlang der Linearführung 14 und um die Drehachse 22 so zugestellt, daß die Fräsfläche 31 - wie erwähnt - tangential an der Kontur 32 der im wesentlichen rechteckigen Platte 5 angreift. Damit ist es möglich, mit dem Fräswerkzeug 25 eine exakt definierte Kontur an der Platte 5 zu erzeugen.

## Patentansprüche

1. Rundtakt-Bearbeitungsmaschine, insbesondere Putzmaschine, für keramische Artikel insbesondere mit komplexen geometrischen Konturformen umfassend
- ein Maschinengestell (1),
- mehrere, über den Umfang des Maschinengestells (1) verteilte Bearbeitungsstationen (2.1 - 2.6), die jeweils mit Bearbeitungswerkzeugen (25) für den keramischen Artikel (5) bestückt sind,
- eine Aufgabestation (3) und eine Abnahmestation (4) für die zu bearbeitenden keramischen Artikel (5), und
- ein mehrarmiges Drehkreuz (6) zum Transport der keramischen Artikel (5) zwischen den Stationen (2.1 - 2.6, 3, 4), an dessen Armen (8.1 - 8.8) jeweils Halter (9) für einen keramischen Artikel (5) angeordnet sind,
**dadurch gekennzeichnet, daß**
mindestens eine der Bearbeitungsstationen (2.1 - 2.6) aufweist
- einen in seiner Drehstellung definiert steuerbaren Drehteller (10) zur Aufnahme eines keramischen Artikels (5) und
- eine Manipulatoreinheit (13) für das Bearbeitungswerkzeug (25) mit
= einem definiert linear zum Drehteller (10) zustellbaren Werkzeugschlitten (15) und
= einem in seiner Drehstellung definiert steuerbaren, drehbar am Werkzeugschlitten (15) gelagerten Werkzeugträger (21) für das Bearbeitungswerkzeug (25).

2. Bearbeitungsmaschine nach Anspruch 1, **dadurch gekennzeichnet, daß** der Drehteller (10), der Werkzeugschlitten (15) und der Werkzeugträger (21) jeweils durch Servomotoren (11, 19, 23) angetrieben sind.

3. Bearbeitungsmaschine nach Anspruch 1 oder 2, **dadurch gekennzeichnet, daß** die Zustellrichtung (20) des Werkzeugschlittens (15) horizontal und radial bezüglich dem Drehkreuz (6) weist.

4. Bearbeitungsmaschine nach einem der Ansprüche 1 bis 3, **dadurch gekennzeichnet, daß** die Drehachsen (12, 22) des Drehtellers (10) und des Werkzeugträgers (21) zueinander parallel und vertikal gerichtet sind.

5. Bearbeitungsmaschine nach einem der Ansprüche 1 bis 4, **dadurch gekennzeichnet, daß** eine dem Drehteller (10), dem Werkzeugschlitten (15) und dem Werkzeugträger (21) zugeordnete zentrale Steuereinheit (29) vorgesehen ist, die die sich einander überlagernden Bewegungen von Drehteller (10), Werkzeugschlitten (15) und Werkzeugträger (21) steuert.

6. Bearbeitungsmaschine nach Anspruch 5, **dadurch gekennzeichnet, daß** die Steuereinheit (29) den Drehteller (10), Werkzeugschlitten (15) und Werkzeugträger (21) derart steuert, daß das Bearbeitungswerkzeug (25) die zu bearbeitende Kontur des keramischen Artikels (5) tangential beaufschlagt.

7. Bearbeitungsmaschine nach Anspruch 5 oder 6, **dadurch gekennzeichnet, daß** die Steuereinheit (29) mit einer Eingabeeinheit (30) für die Sollkontur des zu bearbeitenden keramischen Artikels (5) versehen ist.

8. Bearbeitungsmaschine nach Anspruch 7, **dadurch gekennzeichnet, daß** die Eingabeeinheit (30) eine mechanische Schablonen-Abtasteinrichtung oder ein optisch arbeitendes Erkennungssystem für die Artikelkontur ist.
